Europäisches Patentamt

European Patent Office

Office européen des brevets

(19)

(11) Veröffentlichungsnummer : **0 328 010 B1**

(12) **EUROPÄISCHE PATENTSCHRIFT**

(45) Veröffentlichungstag der Patentschrift :
**17.06.92 Patentblatt 92/25**

(51) Int. Cl.⁵ : **F01L 1/04**

(21) Anmeldenummer : **89101973.9**

(22) Anmeldetag : **04.02.89**

(54) **Gebaute Welle und Verfahren zur Herstellung solcher Welle.**

(30) Priorität : **07.02.88 DE 3803682**

(43) Veröffentlichungstag der Anmeldung :
**16.08.89 Patentblatt 89/33**

(45) Bekanntmachung des Hinweises auf die
Patenterteilung :
**17.06.92 Patentblatt 92/25**

(84) Benannte Vertragsstaaten :
**BE CH DE ES FR GB IT LI NL SE**

(56) Entgegenhaltungen :
**DE-A- 2 232 438**
**DE-A- 3 227 693**
**DE-A- 3 530 600**

(73) Patentinhaber : **Emitec Gesellschaft für
Emissionstechnologie mbH
Hauptstrasse 150
W-5204 Lohmar 1 (DE)**

(72) Erfinder : **Swars, Helmut
Riedweg 11
W-5060 Bergisch Gladbach 1 (DE)**

(74) Vertreter : **Neumann, Ernst Dieter, Dipl.-Ing. et
al
HARWARDT NEUMANN PATENTANWÄLTE
Scheerengasse 2 Postfach 1455
W-5200 Siegburg (DE)**

## Beschreibung

Die Erfindung betrifft eine gebaute Welle aus einem Rohrkörper und darauf festgelegten Antriebs- oder Koppelelementen, insbesondere eine Nockenwelle oder Getriebewelle, auf der Wälzlager mit zumindest ungeteiltem äußeren Lagerring zwischen den Antriebs- und Koppelelementen montiert sind, sowie ein Verfahren zur Herstellung solcher Wellen. Nockenwelle und Getriebewelle sind hier nur beispielhaft erwähnt. Andere Anwendungsfälle sind möglich.

Eine Welle der genannten Art ist aus der DE-A-2 232 438 bekannt, bei der auf ein kreiszylindrisches Innenrohr als Formkörper mit gleichmäßiger Wanddicke ausgebildete Nockenrohre und teilweise zwischen diesen liegende vollständige Kugellager im Festsitz aufgeschoben sind. Zur zusätzlichen Befestigung der Nockenrohre sind Punktschweißungen oder Spannstifte'vorgeschlagen. Die genannten Nockenrohre anfassen jeweils mehrere Ausformungen zur Bildung der Nocken und daran anschließende Rohrstücke. Umformvorgänge für das tragende Innenrohr sind nicht vorgesehen. Die konventionellen Kugellager mit üblich ausgebildetem Lagerinnenring erhöhen die rotierenden Massen der Welle. Die Verbindung zwischen den genannten Nockenrohren und dem kreiszylindrischen Innenrohr erscheint wenig zuverlässig.

Aus der DE-A-3 530 600 und ebenso aus der DE-A-3 633 435 sind jeweils Nockenwellen bekannt, bei denen einzelne Antriebselemente wie Nocken und Zahnräder sowie Gleitlagerringe aufgeschoben und durch in Abschnitten vollzogenes inneres hydraulisches Aufweiten des Rohrkörpers im Bereich dieser Konstruktionselemente kraft- und gegebenenfalls formschlüssig festgelegt werden. Die Art der Befestigung bezieht sich dabei in gleicher Weise auf die Nocken und die Gleitlagerringe. Infolge des genannten Herstellungsverfahrens ist die mechanische Fertigbearbeitung sowohl der Nocken als auch der Gleitlagerringe erst nach dem Herstellen der Verbindung möglich. Nockenwellen dieser Art werden wie herkömmliche einstückige Wellen in Gleitlagern geführt, deren Größe durch den Durchmesser des Wellenkörpers bestimmt wird. Dessen Querschnitt wird von den vorliegenden Festigkeitsbeanspruchungen bestimmt. Es ist verständlich, daß bei gleichbleibenden Randbedingungen, d.h. insbesondere bei vorgegebener Drehmomentbelastung die Außendurchmesser von Wellen mit hohlem Rohrkörper gegenüber massiven Wellen in der Regel im Außendurchmesser größer sind. Neben der Festigkeit des Rohres selber ist hierfür insbesondere die erforderliche Sitzoberfläche für den reibschlüssigen Sitz der Antriebs- oder Koppelelemente auf dem Rohrkörper ausschlaggebend. Ein weiterer Gesichtspunkt für die Größe des Rohrkörpers ist der erforderliche Innendurchmesser, der zum Einführen einer Sonde für das Verbinden von Rohrkörper und Antriebselementen freibleiben muß.

In nachteiliger Weise haben daher die genannten Wellen aufgrund der Lagergröße eine unerwünscht hohe Reibleistung. Darüber hinaus ist das Problem der Lagerschmierung unzureichend gelöst, da zur Schmierölführung besondere Einbauten in der Welle erforderlich sind, die die Herstellkosten erhöhen.

Der Erfindung liegt daher die Aufgabe zugrunde, eine gebaute Welle der eingangs genannten Art und ein Verfahren zum Herstellen von derartigen gebauten Wellen bereitzustellen, die sich bei geringer Reibleistung und großer Festigkeit in kostengünstiger Weise darstellen lassen. Die Lösung besteht in einer Welle, bei der die Antriebs- oder Koppelelemente durch in Abschnitten vollzogenes inneres hydraulisches Aufweiten des Rohrkörpers festgelegt sind und die Lagerstellen an vom hydraulischen Aufweiten des Rohrkörpers ausgenommenen axialen Bereichen liegen und in einem Verfahren zu deren Herstellung, bei der die Wälzlager bei zunächst lose aufgeschobenen Antriebs- oder Koppelelementen fertig montiert werden und anschließend die Antriebs- oder Koppelelemente durch in Abschnitten vollzogenes inneres hydraulisches Aufweiten des Rohrkörpers ausschließlich außerhalb von den Wälzlagern eingenommener axialer Bereiche festgelegt werden. Nach der erfindungsgemäßen Ausgestaltung wird eine Möglichkeit bereitgestellt, wälzgelagerte Nockenwellen und dergleichen, mit deutlich verringerten Reibleistungen und ohne Schmierungsprobleme zu günstigen Kosten herzustellen, die im wesentlichen durch die einfache Bauweise der verwendeten Wälzlager mit ungeteiltem Außenring bestimmt wird. In besonders bevorzugter Ausführung wird der Rohrkörper selber als Lagerinnenbahn ausgebildet, wobei bereits vor dem Aufschieben der Antriebselemente und der Lager in abwechselnder Reihenfolge die Lagerbahnbereiche mechanisch bearbeitet, gehärtet und poliert werden können. Alleine die Tatsache, daß diese Verfahrensschritte am glatten Rohrkörper durchgeführt werden können, stellt einen erheblichen Kostenvorteil dar. Aufgrund der geringen radialen Bauweise, z.B. in der Ausführung als Nadellager können nach dem erfindungsgemäßen Verfahren hergestellte Welle übliche, gleitgelagerte Wellen ohne Probleme substituieren. Die erfindungswesentliche Maßnahme, den Bereich der inneren Lagerbahn von der Druckbeaufschlagung zum Fügen auszunehmen, ist für diese Möglichkeit der fertigen mechanischen Bearbeitung vor der Montage von besonderer Bedeutung.

Es ist selbstverständlich, daß der Rohrkörper nicht einstückig sein muß, sondern auch in aufgebauter Konstruktion aus einzelnen Rohrstücken und Hülsen zusammengesetzt sein kann, wie es dem auf diesem Gebiet erreichten Stand der Technik entspricht.

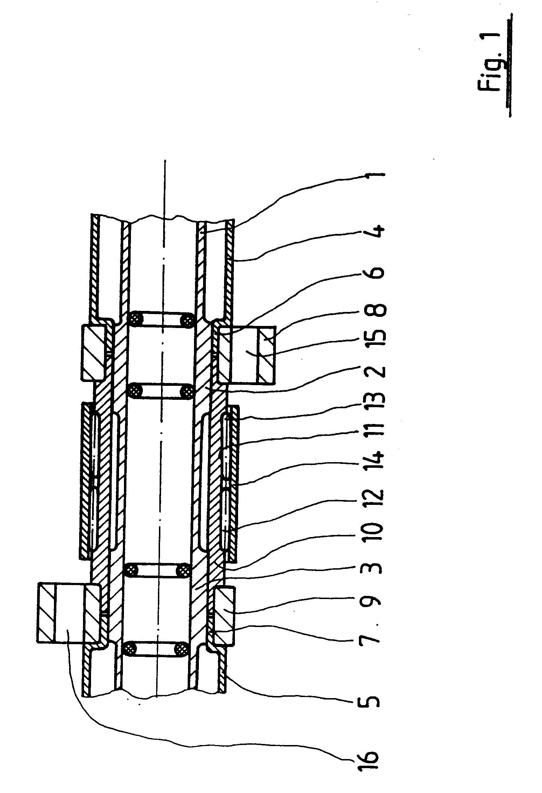

Ein bevorzugtes Ausführungsbeispiel ist in der Zeichnung dargestellt.

EP 0 328 010 B1

Im einzelnen ist ein innerer Rohrkörper 1 mit einzelnen Wandstärkenverdickungen 2, 3 erkennbar, auf den abgesetzte Hülsen 4, 5 aufgeschoben sind, die mit durchmesserreduzierten Bundbereichen 6, 7 unter zwei gegeneinander an 90° versetzte Antriebselemente 8, 9 in Form von Nocken greifen. Auf den innenliegenden Rohrkörper 1 ist zwischen den genannten Hülsen ein außenliegender Rohrkörper 10 aufgeschoben und durch radiales Aufweiten des inneren Rohrkörpers in den durch angedeutete Dichtungsringe vorgegebenen Bereichen kraftschlüssig verbunden. Am äußeren Rohrkörper 10 ist eine Lagerlaufbahn 11 eingedreht, die zugleich der axialen Sicherung der in zwei Reihen angeordneten Lagernadeln 12, 13 dient. Diese werden vom äußeren Lagerring 14 gehalten, dessen innerer lichter Durchmesser kleiner ist als der Durchmesser der Antriebselemente 8, 9 in der größten Erstreckung. Jeweils unter den Nockenerhebungen weisen die Antriebselemente 8, 9 zur Gewichtsreduzierung Durchbrüche 15, 16 auf.


## Patentansprüche

1. Gebaute Welle aus einem Rohrkörper (1; 10) und darauf festgelegten Antriebs- oder Koppelelementen (8,9), insbesondere Nockenwelle oder Getriebewelle, auf der Wälzlager (11, 12, 13, 14) mit zumindest ungeteiltem äußeren Lagerring (14) zwischen den Antriebs- oder Koppelelementen (8, 9) montiert sind,
dadurch gekennzeichnet,
daß die Antriebs- oder Koppelelemente (8, 9) durch in Abschnitten vollzogenes inneres hydraulisches Aufweiten des Rohrkörpers (1; 10) festgelegt sind und daß die Lagerstellen an vom hydraulischen Aufweiten des Rohrkörpers (1; 10) ausgenommenen axialen Bereichen liegen.

2. Gebaute Welle nach Anspruch 1,
dadurch gekennzeichnet,
daß die innere Lagerbahn (11) unmittelbar auf dem Rohrkörper (1; 10) ausgebildet ist.

3. Gebaute Welle nach Anspruch 2,
dadurch gekennzeichnet,
daß die innere Lagerbahn (11) durch eine Eindrehung am Rohrkörper (1; 10) gebildet wird.

4. Gebaute Welle, nach einem der Ansprüche 2 oder 3,
dadurch gekennzeichnet,
daß die innere Lagerbahn (11) unmittelbar auf einem außenliegenden Rohrkörper (10) ausgebildet ist, der außerhalb der Lagerstelle in den radialer Aufweitung unterzogenen Bereichen eines inneren Rohrkörpers (1) auf diesem kraftschlüssig festgelegt ist.

5. Gebaute Welle nach einem der Ansprüche 1 bis 4,
dadurch gekennzeichnet,
daß die Wälzlager mehrreihig ausgeführt sind.

6. Gebaute Welle nach einem der Ansprüche 1 bis 4,
dadurch gekennzeichnet,
daß die Wälzlager als Nadellager ausgeführt sind.

7. Gebaute Welle nach einem der Ansprüche 1 bis 4,
dadurch gekennzeichnet,
daß die Wälzlager als Kugellager ausgebildet sind.

8. Verfahren zur Herstellung einer gebauten Welle aus einem Rohrkörper und darauf festgelegten Antriebs- oder Koppelelementen, insbesondere Nockenwelle oder Getriebewelle, bei der an den Lagerstellen Wälzlager mit zumindest ungeteiltem äußeren Lagerring aufgescho ben werden.
dadurch gekennzeichnet,
daß die Wälzlager (11, 12, 13, 14) bei zunächst lose aufgeschobenen Antriebs- oder Koppelelementen (8, 9) fertig montiert werden und anschließend die Antriebs- oder Koppelelemente (8, 9) durch in Abschnitten vollzogenes inneres hydraulisches Aufweiten des Rohrkörpers (1; 10) ausschließlich außerhalb von den Wälzlagern (11, 12, 13, 14) eingenommener axialer Bereiche festgelegt werden.

9. Verfahren nach Anspruch 8,
dadurch gekennzeichnet,
daß axial fortschreitend jeweils ein Wälzlager (11, 12, 13, 14) fertig montiert wird, bevor das benachbarte Antriebs- oder Koppelelement (8, 9) lose auf den Rohrkörper (1; 10) aufgeschoben wird.

10. Verfahren nach einem der Ansprüche 8 oder 9,
dadurch gekennzeichnet,
daß der Rohrkörper (1; 10) abschnittsweise an den für die Wälzlager (11, 12, 13, 14) vorgesehenen Bereichen mechanisch bearbeitet und/oder wärmebehandelt und/oder oberflächenvergütet wird.

## Claims

1. An assembled shaft consisting of a tubular member (1; 10) and driving or coupling elements (8, 9) secured thereto, especially a camshaft or driveshaft on which there are assembled rolling contact bearings (11, 12, 13, 14) with at least an undivided outer bearing race (14) between the driving or coupling elements (8, 9), characterised in
that the driving or coupling elements (8, 9) are secured by internally hydraulically expanding the tubular member (1; 10) in portions and that the bearing locations are positioned in axial regions excluded from the hydraulic expansion of the tubular member (1; 10).

2. An assembled shaft according to claim 1,
characterised in
that the inner bearing track (11) is provided directly on the tubular member (1; 10).

3. An assembled shaft according to claim 2,
characterised in
that the inner bearing track (11) is formed by a recess in the tubular member (1; 10).

4. An assembled shaft according to any one of claims 2 or 3,
characterised in
that the inner bearing track (11) is provided directly on an externally positioned tubular member (10) which, outside the bearing location, in the radially expanded regions of an inner tubular member (1), is secured thereto in a force-locking way.

5. An assembled shaft according to any one of claims 1 to 4,
characterised in
that the rolling contact bearings are designed as multi-row bearings.

6. An assembled shaft according to any one of claims 1 to 4,
characterised in
that the rolling contact bearings are designed as needle bearings.

7. An assembled shaft according to any one of claims 1 to 4,
characterised in
that the rolling contact bearings are designed as roller bearings.

8. A process of manufacturing an assembled shaft consisting of a tubular member and driving or coupling elements secured thereto, especially a camshaft or driveshaft, in the case of which rolling contact bearings with at least undivided outer bearing races are slid on in the bearing locations,
characterised in
that with initially loosely slid-on driving or coupling elements (8, 9), the rolling contact bearings (11, 12, 13, 14) are finish-assembled and that subsequently the driving or coupling elements (8, 9) are secured by internally hydraulically expanding the tubular member (1; 10) in portions exclusively outside the axial regions taken up by the rolling contact bearings (11, 12, 13, 14).

9. A process according to claim 8,
characterised in
that in an axial progression, always one rolling contact bearing (11, 12, 13, 14) is finish-assembled before the adjoining driving or coupling element (8, 9) is loosely slid on to the tubular member (1; 10).

10. A process according to any one of claims 8 or 9,
characterised in
that in the regions provided for the rolling contact bearings (11, 12, 13, 14), the tubular member (1; 10) is machined and/or heat treated and/or surface quenched and tempered in portions.

## Revendications

1. Arbre composite constitué par un corps tubulaire (1; 10) et par des éléments d'entraînement ou de couplage (8, 9) fixés sur ce corps, cet arbre composite étant notamment un arbre à cames ou un arbre de mécanisme de transmission, sur lequel sont montés des roulements (11, 12, 13, 14) ayant au moins une bague extérieure (14) non partagée, ces roulements étant disposés entre lesdits éléments d'entraînement ou de couplage (8, 9),
caractérisé
par le fait que les éléments d'entraînement ou de couplage (8, 9) sont fixés par dilatation hydraulique intérieure du corps tubulaire (1; 10) effectuée par portions, et par le fait que les zones de portée se trouvent en des régions axiales exemptes de dilatation hydraulique du corps tubulaire (1; 10).

2. Arbre composite selon revendication 1,

caractérisé

par le fait que la piste de portée intérieure (11) est aménagée directement sur le corps tubulaire (1; 10).

3. Arbre composite selon revendication 2,

caractérisé

par le fait que la piste de portée intérieure (11) est formée par tournage en plongée dans le corps tubulaire (1; 10).

4. Arbre composite selon l'une des revendications 2 ou 3,

caractérisé

par le fait que la piste de portée intérieure (11) est aménagée directement sur un corps tubulaire extérieur (10) qui est fixé par serrage sur un corps tubulaire intérieur (1), en dehors de la zone de portée, dans les régions dudit corps tubulaire soumises à dilatation radiale.

5. Arbre composite selon l'une des revendications 1 à 4,

caractérisé

par le fait que les roulements sont réalisés avec plusieurs rangées.

6. Arbre composite selon l'une des revendications 1 à 4,

caractérisé

par le fait que les roulements sont réalisés en tant que roulements à aiguilles.

7. Arbre composite selon l'une des revendications 1 à 4,

caractérisé

par le fait que les roulements sont réalisés en tant que roulements à billes.

8. Procédé de fabrication d'un arbre composite constitué par un corps tubulaire sur lequel sont fixés des éléments d'entraînement ou de couplage, cet arbre étant notamment un arbre à cames ou un arbre d'un mécanisme de transmission, dans lequel des roulements ayant au moins une bague extérieure non partagée sont emboîtés sur les zones de portée,

caractérisé

par le fait que les roulements (11, 12, 13, 14) sont montés définitivement alors que les éléments d'entraînement ou de couplage (8, 9) sont d'abord emboîtés sans être serrés, après quoi lesdits éléments d'entraînement ou de couplage (8, 9) sont fixés par dilatation hydraulique intérieure, effectuée par portions, du corps tubulaire (1; 10), cela exclusivement à l'extérieur des zones occupées par les roulements (11, 12, 13, 14).

9. Procédé selon revendication 8,

caractérisé

par le fait qu'en progressant axialement, on monte à chaque fois un roulement (11, 12, 13, 14), cela définitivement, avant que l'élément d'entraînement ou de couplage voisin (8, 9) soit emboîté sans serrage sur le corps tubulaire (1; 10).

10. Procédé selon l'une des revendications 8 ou 9,

caractérisé

par le fait que le corps tubulaire (1; 10) est soumis, par portions, dans les régions prévues pour les roulements (11, 12, 13, 14), à un usinage mécanique et/ou à un traitement thermique et/ou à un traitement de surface.

Fig. 1